# EUROPÄISCHE PATENTSCHRIFT

(11) **EP 1 487 616 B1**
(45) Veröffentlichungstag und Bekanntmachung des Hinweises auf die Patenterteilung: **30.06.2010**
(21) Anmeldenummer: 03711954.2
(22) Anmeldetag: 10.03.2003
(51) Int. Cl.: G05B 19/418

(54) **AUTOMATISCHE PROZESSKONTROLLE**
AUTOMATIC PROCESS CONTROL
COMMANDE DE PROCESSUS AUTOMATIQUE

(30) Priorität: 20.03.2002 DE 10212451; 11.04.2002 DE 10215885
(43) Veröffentlichungstag der Anmeldung: 22.12.2004
(73) Patentinhaber: Volkswagen Aktiengesellschaft, 38436 Wolfsburg (DE)
(72) Erfinder: SCHREIBER, Werner, 38527 Meine (DE); ALT, Thomas, 80469 München (DE)
(86) Internationale Anmeldenummer: PCT/EP2003/002409
(87) Internationale Veröffentlichungsnummer: WO 2003/078112

(56) Entgegenhaltungen:
- WO-A-00/02162
- WO-A-00/52536
- WO-A-00/58799
- WO-A-01/35178
- WO-A-02/17026
- DE-A- 19 716 327
- US-A- 5 745 387
- US-B1- 6 345 207
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" , WERKSTATTSTECHNIK, SPRINGER VERLAG. BERLIN, DE, VOL. 86, NR. 5, PAGE(S) 248-252 XP000585192 ISSN: 0340-4544 Absätze [0003],[0004]; Abbildungen 3,4
- KUZUOKA H: "SPATIAL WORKSPACE COLLABORATION: A SHAREVIEW VIDEO SUPPORT SYSTEM FOR REMOTE COLLABORATION CAPABILITY" , STRIKING A BALANCE. MONTEREY, MAY 3 - 7, 1992, PROCEEDINGS OF THE CONFERENCE ON HUMAN FACTORS IN COMPUTING SYSTEMS, READING, ADDISON WESLEY, US, PAGE(S) 533-540 XP000426833 Abbildungen 13-17

## Beschreibung

Die Erfindung betrifft ein Verfahren zur automatischen Prozesskontrolle, bei welchem eine reale Arbeitsumgebung mit Hilfe einer Arbeitsumgebungserfassungseinrichtung erfasst wird. Des weiteren betrifft die Erfindung ein System zur automatischen Protokollierung von realen Arbeitsschritten, mit einer eine reale Arbeitsumgebung erfassenden Arbeitsumgebungserfassungseinrichtung und mit zumindest einem reale Arbeitsschritte ausführenden Manipulator. Schließlich betrifft die Erfindung auch die Verwendung eines erfindungsgemäßen Verfahrens und eines erfindungsgemäßen Systems.

Verfahren zur Protokollierung und Überprüfung von Arbeitsschritten sind aus dem Stand der Technik bekannt. Ein solches bekanntes Verfahren, das die Protokollierung und Überprüfung von Arbeitsschritten bei der Kommissionierung von Teilen in der Produktion ermöglicht, ist beispielsweise das sog. "Pick-To-Light"-Verfahren. Bei diesem Verfahren wird dem Mitarbeiter mit Hilfe direkt am Lagerort angebrachter Anzeigeinstrumenten angezeigt, welche Produktmengen bzw. welche Waren er zu entnehmen hat. Eine Bestätigung der Entnahme erfolgt per Knopfdruck durch den Anwender selbst. Dies ist jedoch Nachteilig an dem bekannten Verfahren, da es dadurch möglich ist, dass Waren entnommen werden können, ohne dass eine Bestätigung erfolgt. Auch ist es dadurch möglich, dass Warenentnahmen bestätigt werden, die tatsächlich gar nicht stattgefunden haben. In diesen Fällen ist eine Bereitstellungssequenz für eine produktspezifische Kommissionierung unterbrochen. Die Lagerhaltung kann nicht mehr kontrolliert werden. Auch wenn mehrere Mitarbeiter bei der Kommissionierung eingesetzt werden, müssen deren Arbeitsabläufe und die Koordination ihrer Arbeitsschritte miteinander koordiniert werden.

Aus dem Stand der Technik sind ebenfalls sog. "Augmented Reality" (AR)-Systeme bekannt. Diese AR-Systeme ermöglichen eine Überlagerung der realen Umgebung mit einer rechnergenerierten Umgebung, der virtuellen Welt.

Augmented Reality stellt eine Mensch-Maschine-Schnittstelle dar, mit deren Hilfe dem Anwender Informationen in sein Sichtfeld eingeblendet werden. Die eingeblendeten Informationen erweitern die Wahrnehmung der Anwender. Eine Einblendung kann bei Augmented Realtiy Systemen kontextabhängig sein, d.h. passend und abgeleitet vom jeweils betrachteten Objekt, z.B. einem Bauteil. Beispielsweise wird das reale Sichtfeld eines Monteurs durch eingeblendete Montagehinweise um für ihn wichtige Informationen erweitert. Als Informationen können prinzipiell jegliche Arten von Daten, insbesondere Bilder und/oder Texte eingeblendet werden. Der Anwender hat durch die Überlagerung von virtueller und realen Welt die Möglichkeit, Soll-Ist-Abgleiche durchzuführen. Darüber hinaus kann mit Hilfe eines Augmented Reality Systems eine komplexe Information jeglicher Art auch ohne Überlagerung mit dem realen Sichtfeld visualisiert werden.

Die WO 01/35178 A1 offenbart ein System zur Dokumentationsverarbeitung für eine so genannte situationsgerechte Unterstützung der Interaktion zwischen einem Anwender und Automatisierungseinrichtungen. Der Anwender ist mit einer Datenbrille ausgestattet, an der eine Videokamera sowie ein Mikrofon angeordnet sind. Die Datenbrille ist mit einer Funk-Sende-Empfangsvorrichtung gekoppelt, die über eine Funkschnittstelle mit dem Automatisierungssystem kommunizieren kann. Das Automatisierungssystem ist über eine Datenverbindung mit einem Augmented-Reality-System (AR-System) koppelbar. Das AR-System enthält ein Informationsmodul zur Speicherung von Informationsdaten, ein AR-Basismodul sowie ein AR-Anwendungsmodul. Das AR-System ist über eine Datenverbindung mit dem Internet verbindbar, wobei über eine Internetverbindung ein Zugriff auf weitere Speicher- und Dokumentationsdaten möglich ist. Der Anwender, der mit der Datenbrille und der mobilen Funk-Sende-Einrichtung ausgestattet ist, ist in der Lage, sich für Wartungs- und Servicezwecke in der Anlage frei zu bewegen. Ist beispielsweise die Wartung oder Reparatur einer bestimmten Teilkomponente der Anlage erforderlich, so wird mit Hilfe der Kamera der Datenbrille gegebenenfalls gesteuert durch Sprachkommandos, die vom Mikrofon erfasst werden, ein entsprechender Zugang zu den relevanten Dokumentationsdaten hergestellt.

Die US 6 345 207 B1 offenbart eine Arbeitsunterstützungsvorrichtung mit einem Display in der Nähe einer Arbeitsposition eines Arbeiters zur Darstellung eines Bildes eines Arbeitsdetails und eines fertigen Arbeitsergebnisses.

Die WO 02/17026 A2 offenbart ein System zur kontextbezogenen Protokollierung, das ein Protokollaufzeichnungssystem zur Aufzeichnung von elektronische Daten enthaltenden Protokollen, Attribute, die Informationen zumindest eines Anwenders enthalten, Listen zur Zuordnung von Attributwerten zu den Attributen in Listenform sowie ein Protokollierungssystem zur Verknüpfung der aufgezeichneten Protokolle mit den Listen umfasst.

Zum Einsatz kommen AR-Systeme beispielsweise in der Flugzeugmontage. Hierbei werden durch das AR-System Informationen in das Sichtfeld eines Monteurs eingeblendet. Diese Informationen, beispielsweise Montageanleitungen, sind für den Monteur bei einem aktuell durchgeführten Arbeitsschritt hilfreich. In diesem Fall ersetzt das AR-System das herkömmliche Montagehandbuch. Vorzugsweise werden halbdurchlässige Datenbrillen eingesetzt, die sowohl den Blick des Monteurs auf ein gerade bearbeitetes reales Objekt freigeben als auch eine Einblendung verschiedenster Informationen erlaubt. Solche Datenbrillen sind beispielsweise aus T. P. Caudell, D. M. Mizell: "Augmented Reality: An Application of Heads-Up Display Technology to Manual Manufacturing Processes", Proceedings of the Hawaii International Conference on Systems Sciences, pp. 659-669, IEEE Press, Januar 1992 beschrieben. Nachteilig an den beschriebenen Augmented Reality-Systemen ist, dass diese keine automatische Protokollierung von Arbeitsschritten ermöglichen. Werden durch den Monteur Fehler bei der Durchführung von Arbeitsschritten gemacht, fallen diese nicht auf.

Ausgehend von den beschriebenen Nachteilen des Standes der Technik lag der Erfindung das technische Problem zugrunde, eine automatische Protokollierung und Überprüfung von Arbeitsschritten zu ermöglichen.

Das zuvor hergeleitete und aus dem Stand der Technik bekannte technische Problem wird erfindungsgemäß durch ein Verfahren gelöst, bei dem reale Arbeitsvorgänge von Manipulatoren in der realen Arbeitsumgebung erfasst werden, bei dem erfasste reale Arbeitsvorgänge mit zumindest einem vorgegebenden virtuellen Arbeitsvorgang verglichen werden und ein Vergleichsergebnis der realen Arbeitsvorgänge automatisch protokolliert wird.

Als Arbeitsumgebungserfassungseinrichtung kommen Bilderfassungseinrichtungen mit Hilfe von Kameras, Infrarotsensoren, Radarsensoren, Ultraschallsensoren oder sonstige Mittel in Betracht, mit deren Hilfe eine Arbeitsumgebung hinreichend genau erfasst werden kann.

Arbeitsvorgänge von Manipulatoren umfassen Tätigkeiten aller Art, die zur Erstellung eines Produkts notwendig sind. Insbesondere bezieht sich der Begriff auf Tätigkeiten zur Auswahl von Teilen innerhalb der Montage. Dabei kommen alle Industriegüter, insbesondere auch Kraftfahrzeuge, in Betracht.

Manipulatoren sind insbesondere menschliche Gliedmaßen, wie beispielsweise Arm und Finger oder auch Werkzeuge, wie beispielsweise Schraubenschlüssel.

Durch einen Vergleich von erfassten realen Vorgängen (Ist-Vorgang) mit einem vorgegebenen virtuellen Arbeitsvorgang (Soll-Vorgang) lässt sich feststellen, welcher Arbeitsvorgang tatsächlich vorgenommen worden ist. Ergibt ein Vergleich von Ist-Vorgang mit Soll-Vorgang ein positives Vergleichsergebnis, so lässt sich der Ist-Vorgang erfindungsgemäß automatisch protokollieren. Auch bei einem negativem Vergleichsergebnis ist eine Protokollierung möglich. Dadurch können auch fehlerhafte Arbeitsschritte oder nicht durchgeführte Arbeitsschritte ermittelt werden.

Gemäß einer vorteilhaften Ausgestaltung wird vorgeschlagen, dass die erfasste reale Arbeitsumgebung in Relation zu einer virtuellen Arbeitsumgebung gesetzt wird und dass reale Arbeitsvorgänge von Manipulatoren in der virtuellen Arbeitsumgebung als virtuelle Arbeitsvorgänge virtueller Manipulatoren angezeigt werden. Dabei ist es vorteilhaft, dem Anwender die Position der zu manipulierenden Teile derart zu kennzeichnen, dass diese durch eine Überlagerung der Markierung mit dem realen Teil erkenntlich werden. Dadurch lässt sich der Arbeitsvorgang dem Anwender leicht erläutern.

Auch ist es vorteilhaft, wenn die zu manipulierenden Gegenstände im wahrgenommenen Bild hinsichtlich ihres räumlichen Ortes mit einem Rahmen oder einem Kreis gekennzeichnet werden. Der Anwender erkennt dann die zu manipulierenden Gegenstände leicht.

Gemäß einer weiteren vorteilhaften Ausgestaltung wird vorgeschlagen, dass die räumliche Position der Manipulatoren erkannt wird und mit einer Soll-Position der Manipulatoren in der virtuellen Arbeitsumgebung verglichen werden. Bei einer dem Fertigungsplan entsprechenden Ausführung der Tätigkeit ergibt sich eine Übereinstimmung der räumlichen Positionen von realen und virtuellen Manipulatoren, wodurch eine korrekte Ausführung protokolliert werden kann. Das manuelle Quittieren von durchgeführten Arbeitsschritten entfällt.

Eine Kontrolle der Protokollierung lässt sich vorteilhaft dadurch erreichen, dass das Vergleichsergebnis angezeigt wird. Dies kann sowohl negativ als auch positiv sein. Der Anwender kann sofort kontrollieren, ob der Durchgeführte Arbeitsschritt protokolliert wurde.

Vorteilhaft lässt sich das Verfahren einsetzen, wenn lediglich dokumentationspflichtige Arbeitsschritte erfasst und protokolliert werden. Dadurch wird die Bearbeitungsgeschwindigkeit deutlich erhöht. Auch ist es möglich, dass das Auslassen von dokumentationspflichtigen Arbeitsschritten protokolliert wird.

Eine Kontrolle eines aktuellen Produktionsfortschrittes sowie die Koordination einzelner Produktionsschritte lässt sich dadurch erreichen, dass die protokollierten Arbeitsschritte zentral gespeichert werden und dass mit Hilfe der zentral gespeicherten, protokollierten Arbeitsschritte ein Produktionsfortschritt dargestellt wird.

Es wird bevorzugt, dass die räumliche Position des Manipulators und/oder die räumliche Position des Anwenders und/oder die räumliche Position des zu manipulierenden Arbeitsgegenstandes und/oder die räumliche Position des Anwenders im Bezug auf den Manipulator und den zu manipulierenden Gegenstand erfasst wird. Durch Erfassung der räumlichen Positionen lässt sich leicht der zu protokollierende Arbeitsvorgang erkennen.

Das erfindungsgemäße Problem wird gemäß eines weiteren Gegenstandes der Erfindung durch ein System gelöst, das sich dadurch kennzeichnet, dass eine Vergleichseinrichtung vorgesehen ist, dass eine Protokollierungseinrichtung vorgesehen ist, dass die Arbeitsumgebungserfassungseinrichtung geeignet ist, reale Arbeitsschritte zu erfassen, dass die Vergleichseinrichtung geeignet ist, die erfassten Arbeitsschritte mit gespeicherten virtuellen Arbeitsschritten zu vergleichen, und dass die Protokollierungseinrichtung geeignet ist, Vergleichsergebnisse zu protokollieren.

Bei einem solchen System ist ein Augmented Reality-System vorteilhaft, wobei dieses Augmented Reality-System geeignet ist, eine virtuelle Arbeitsumgebung in Relation zur erfassten Arbeitsumgebung wiederzugeben. Dem Anwender wird mit Hilfe des Augmented Reality-Systems die virtuelle Arbeitsumgebung angezeigt und er kann sich in Kenntnis der virtuellen Arbeitsumgebung in der realen Arbeitsumgebung bewegen. Montagehinweise und Anleitungen können ihm durch das Augmented Reality-System gegeben werden.

hierbei ist vorteilhaft, dass ein Datenbrille vorgesehen ist, wobei die Datenbrille geeignet ist, die virtuelle Umgebung in Relation zur erfassten realen Umgebung wiederzugeben.

Besonders vorteilhaft und zuverlässig ist eine Protokollierung, wenn eine Mustererkennungseinrichtung vorgesehen ist, wobei die Mustererkennungseinrichtung geeignet ist, die realen Arbeitsschritte mit Hilfe optischer Bilderkennungsverfahren zu erfassen.

Ein weiterer Gegenstand der Erfindung ist die Verwendung eines vorbeschriebenen Verfahrens sowie eines vorbeschriebenen Systems in der Kraftfahrzeugproduktion. Die Erfindung ist nicht auf den Einsatz in der Kraftfahrzeugsproduktion beschränkt. Bei der Herstellung beliebiger Güter, bei der Wartung beliebiger existierender Güter oder bei der Demontage von Gütern lässt sich das erfindungsgemäße Verfahren und das erfindungsgemäße System ebenfalls einsetzen. Des weiteren ist die Erfindung auch bei der Bereitstellung von Gütern als Dienstleistung, beispielsweise im Versandhandel, einsetzbar.

Die Erfindung wird im Nachfolgenden anhand einer Ausführungsbeispiele zeigenden Zeichnung näher erläutert. In der Zeichnung zeigen:
- Fig.: 1 ein Augmented Reality-System;
- Fig. 2: ein erfindungsgemäßes System;
- Fig. 3: ein weiteres erfindungsgemäßes System.

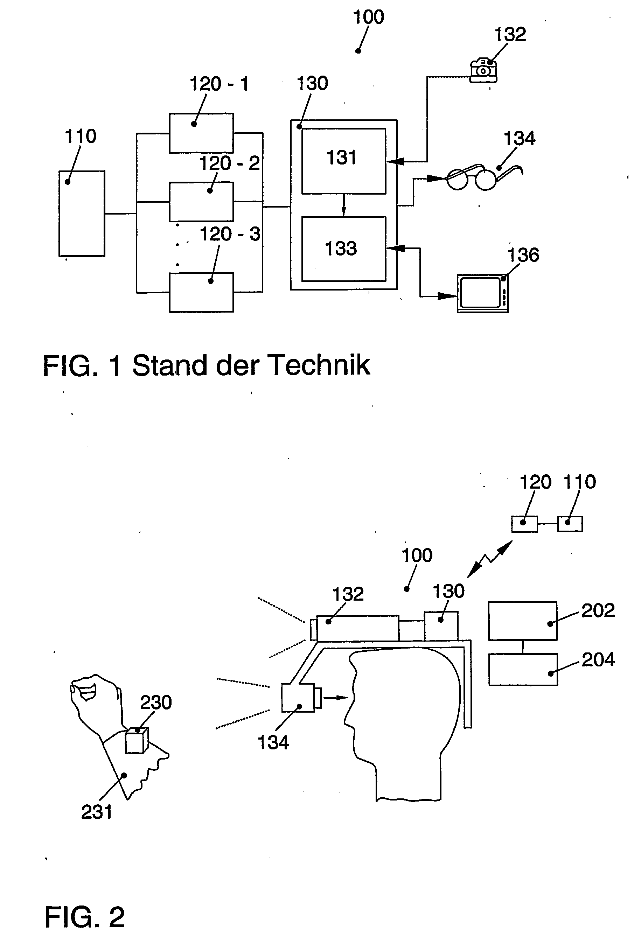

Fig. 1 zeigt ein bekanntes Augmented Reality-System mit einem Datenspeicher 110, Softwareeinrichtungen 120a-n, einer Steuereinrichtung 130, einer Kamera 132 und einer Datenbrille 134. Die Steuereinrichtung 130 weist eine Vermessungseinrichtung 131 und eine Auswerteeinrichtung 133 auf.

Die Kamera 132, die vorteilhafterweise über eine drahtlose Verbindung mit der Steuereinrichtung 130 kommuniziert, nimmt ein Bild der Arbeitsumgebung auf. Die Bildinformationen werden über die drahtlose Verbindung an die Steuereinrichtung 130 übermittelt. Diese Daten werden dann innerhalb der Vermessungseinrichtung 131 kontinuierlich hinsichtlich bekannter Bildmuster analysiert. Durch die Analyse auf bekannte Bildmuster wird die relative Position der Kamera 132 im Bezug auf die räumliche Arbeitsumgebung bestimmt. Die so ermittelte relative Position der Kamera 134 wird an die Auswerteeinrichtung 133 übergeben. In der Auswerteeinrichtung 133 werden entsprechend der ermittelten Positionen geeignete virtuelle Informationen zusammengestellt. Bei der Zusammenstellung der virtuellen informationen werden die Softwareeinrichtungen 120a-n genutzt. Die Softwareeinrichtungen 120a-n sind mit einem Datenspeicher 110 verbunden. Im Datenspeicher 110 sind virtuelle Informationen zu einer Vielzahl von möglichen Positionen innerhalb der Arbeitsumgebung abgelegt. Hierzu gehören u.a. relevante Arbeitsmaterialien und Montageanleitungen. Die zusammengestellten Informationen werden von den Softwareeinrichtungen 120a-n an die Auswerteeinrichtung 133 übergeben. In der Auswerteeinrichtung 133 wird ein virtuelles Bild erstellt, welches über eine vorzugsweise drahtlose Verbindung an die Datenbrille 134 übermittelt wird. In der Datenbrille 134 wird das virtuelle Bild projiziert und somit zur Überlagerung mit dem tatsächlich wahrgenommenen Bild der Arbeitsumgebung gebracht. Ein sich am Ort der realen Umgebung aufhaltender Anwender der Datenbrille 134 hat dadurch zum einen durch die Datenbrille hindurch eine freie Sicht auf die reale Arbeitsumgebung, zum anderen wird von der Steuereinrichtung 130 die virtuelle Information in Abhängigkeit von der betrachteten realen Umgebung in der Datenbrille präsentiert. Auf diese Weise findet im Sichtfeld des Anwenders eine Überlagerung der virtuellen Information mit der realen Arbeitsumgebung statt.

Fig. 2 zeigt ein erfindungsgemäßes System zur automatischen Protokollierung und Überprüfung von Arbeitsschritten. Erneut ist ein Augmented Reality-System 100 dargestellt, bei dem die Steuereinrichtung 130 über eine drahtlose Verbindung in Wirkverbindung mit den Softwareeinrichtungen 120 und dem Datenspeicher 110 steht. Außerdem ist ein Manipulator 231 dargestellt, wobei dies der Arm eines Anwenders ist. Der Manipulator 132 weist eine Markierung 230 auf.

Die Bewegung des Manipulators 231, respektive die Bewegung der Markierung 230 wird über die Kamera 132 aufgenommen. Die Bewegung des Manipulators 231 dient als Eingangsinformation für das erfindungsgemäße Verfahren. Sie wird über die Bewegung der für die Kamera verfolgbaren Markierung 230 erfasst. Die Markierung 230 ist dabei fest am Manipulator 231 angebracht. Außerdem wird die räumliche Position des zu manipulierenden Gegenstandes erfasst. Die erfassten Bildinformationen werden durch die Steuereinrichtung 130 ausgewertet.

Dabei wird durch die Vermessungseinrichtung 131 die bestimmte räumliche Ist-Position des Manipulators 231 und gegebenenfalls die räumliche Ist-Position des zu manipulierenden Objektes (nicht dargestellt) ermittelt und an die Auswerteeinrichtung 133 übergeben. Mit den Softwareeinrichtungen 120a-n sowie den Datenspeichern 110 werden Informationen zu der ermittelten Ist-Position gesammelt. Die Informationen über die Ist-Position werden von der Steuereinrichtung 130 an die Vergleichseinrichtung 202 übermittelt. In der Vergleichseinrichtung 202 sind Soll-Positionen abgelegt. Durch einen Vergleich der Soll-Positionen mit den Ist-Positionen sowie von gespeicherten virtuellen Arbeitsvorgängen mit erfassten realen Arbeitsvorgängen lässt sich feststellen, ob ein vorgegebener Arbeitsvorgang durchgeführt wird. Bei einem positiven Vergleichsergebnis durch die Vergleichseinrichtung 202 wird der Arbeitsvorgang protokolliert und durch die Protokolliereinrichtung 204 abgespeichert. Unter eventueller Einbeziehung weiterer Informationen, wie beispielsweise Toleranzwerte, wird der durch die Manipulation beabsichtigte Arbeitsschritt als durchgeführt oder als nicht durchgeführt in der Protokolliereinrichtung 204 klassifiziert. Entsprechend dieser Klassifikation wird der Arbeitsschritt quittiert und in der Protokolliereinrichtung 204 abgelegt. Des weiteren wird eine graphische Repräsentation der Klassifikation in der Datenbrille 134 angezeigt. Auch ist es möglich, einen fehlerhaften Arbeitsschritt oder das Auslassen eines Arbeitsschrittes zu protokollieren.

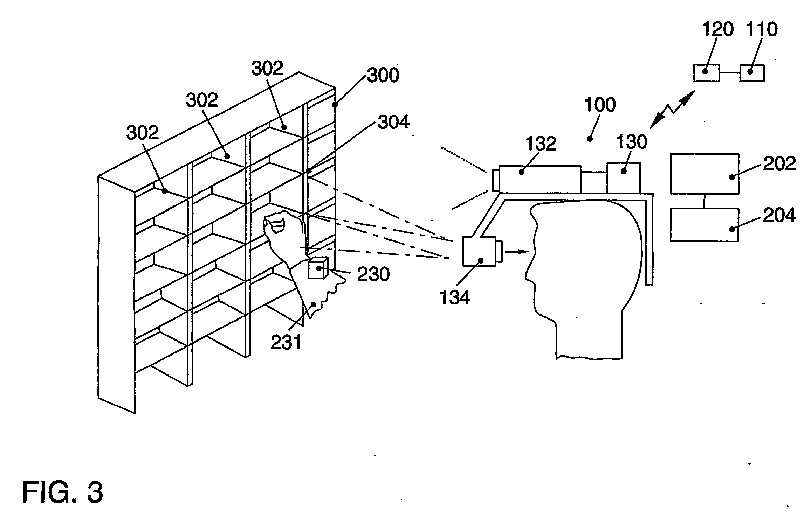

Fig. 3 zeigt eine beispielhafte Anwendung des erfindungsgemäßen Verfahrens. Der Anwender hat die Aufgabe, für ein zu produzierendes Gut die benötigten Teile bereitzustellen. Die benötigten Teile sind in einem Lager 300 abgelegt, wobei das Lager 300 aus verschiedenen Regalböden 302 besteht.

Zunächst wird die Arbeitsumgebung mit Hilfe der Kamera erfasst und Zusatzinformationen werden aus den Datenspeichern 110 geladen. Außerdem werden notwendige Arbeitsschritte ermittelt. Die ermittelten Arbeitsschritte werden über die Datenbrille 134 dem Benutzer angezeigt. In dem vorliegenden Beispiel wird der Lagerort (der Regalboden) des zu entnehmenden Teils über die Datenbrille 134 mittels geeigneter Einblendung 304 angezeigt. Der Benutzer weiß nun, dass er das entsprechende Teil entnehmen muss. Er entnimmt das Teil unter Verwendung des Manipulators 231. Über die Kamera 132 wird die Bewegung der Markierung 230 erkannt und mit einer Soll-Bewegung verglichen. Entspricht die Bewegung der Markierung 230 einer Soll-Bewegung, so wird dies in der Vergleichseinrichtung 202 erkannt und eine erfolgreiche Ausführung des Arbeitsschrittes wird in der Protokolliereinrichtung 204 protokolliert. Eine erfolgreiche oder eine negative Protokollierung wird dem Anwender über die Datenbrille 134 signalisiert.

Durch das erfindungsgemäße System ist es zum einen möglich, dem Anwender Montageanleitungen zu geben, und zum anderen wird überprüft, ob diese Anweisungen korrekt ausgeführt werden. Schließlich wird eine korrekte als auch eine inkorrekte Ausführung eines Arbeitsschrittes protokolliert.

### BEZUGSZEICHENLISTE

- 100: Augmented Reality-System
- 110: Datenspeicher
- 120a-n: Softwareeinrichtungen
- 130: Steuereinrichtung
- 131: Vermessungseinrichtung
- 132: Kamera
- 133: Auswerteeinrichtung
- 134: Datenbrille

- 202: Vergleichseinrichtung
- 204: Protokolliereinrichtung
- 230: Markierung
- 231: Manipulator

- 300: Regal
- 302: Regalboden
- 304: eingeblendeter Regalboden

## Patentansprüche

1. Verfahren zur automatischen Prozesskontrolle, bei welchem eine reale Arbeitsumgebung mit Hilfe einer Arbeitsumgebungserfassungseinrichtung erfasst wird, **dadurch gekennzeichnet,**
- **dass** reale Arbeitsvorgänge von Manipulatoren in der realen Arbeitsumgebung erfasst werden, wobei die räumliche Position des Manipulators und die räumliche Position des zu manipulierenden Arbeitsgegenstandes erfasst wird,
- **dass** die räumliche Bewegung des Manipulators mit einer Soll-Bewegung Position des Manipulators in der virtuellen Arbeitsumgebung verglichen wird, und
- **dass** ein Vergleichsergebnis der realen Arbeitsvorgänge automatisch protokolliert wird.

2. Verfahren nach Anspruch 1, **dadurch gekennzeichnet, dass** die erfasste reale Arbeitsumgebung in Relation zu einer virtuellen Arbeitsumgebung gesetzt wird, und dass reale Arbeitsvorgänge von Manipulatoren in der virtuellen Arbeitsumgebung als virtuelle Arbeitsvorgänge virtueller Manipulatoren angezeigt werden.

3. Verfahren nach einem der Ansprüche 1 und 2, **dadurch gekennzeichnet, dass** das Vergleichsergebnis angezeigt wird.

4. Verfahren nach einem der Ansprüche 1 bis 3, **dadurch gekennzeichnet, dass** dokumentationspflichtige Arbeitsschritte erfasst und protokolliert werden.

5. Verfahren nach einem der Ansprüche 1 bis 4, **dadurch gekennzeichnet, dass** die protokollierten Arbeitsschritte zentral gespeichert werden und dass mit Hilfe der zentral gespeicherten protokollierten Arbeitsschritte ein Produktionsfortschritt dargestellt wird.

6. Verfahren nach einem der Ansprüche 1 bis 5, **dadurch gekennzeichnet, dass** die räumliche Position des Anwenders und/oder die relative räumliche Position des Anwenders in Bezug auf den Manipulator und den zu manipulierenden Arbeitsgegenstand erfasst wird.

7. Verfahren zur Produktion eines Kraftfahrzeugs unter Verwendung eines Verfahrens nach Anspruch 1.

## Claims

1. Method for automatic process control, in which a real working environment is detected with the aid of a working environment detection device, **characterized**
- **in that** real work operations by manipulators in the real working environment are detected, the spatial position of the manipulator and the spatial position of the working object to be manipulated being detected,
- **in that** the spatial movement of the manipulator is compared with the desired movement of the manipulator in the virtual working environment, and
- **in that** a comparison result of the real work operations is logged automatically.

2. Method according to Claim 1, **characterized in that** the detected real working environment is placed in relation to a virtual working environment, and **in that** real work operations by manipulators in the virtual working environment are indicated as virtual work operations of virtual manipulators.

3. Method according to either one of Claims 1 and 2, **characterized in that** the comparison result is indicated.

4. Method according to one of Claims 1 to 3, **characterized in that** documentation-reliable work steps are detected and logged.

5. Method according to one of Claims 1 to 4, **characterized in that** the logged work steps are stored centrally, and **in that** production progress is illustrated with the aid of the centrally stored logged work steps.

6. Method according to one of Claims 1 to 5, **characterized in that** the spatial position of the user and/or the relative spatial position of the user with respect to the manipulator and to the working object to be manipulated is/are detected.

7. Method for the production of a motor vehicle, using a method according to Claim 1.

## Revendications

1. Procédé de contrôle automatique de processus, selon lequel un environnement de travail réel est détecté à l'aide d'un dispositif de détection d'environnement de travail, **caractérisé en ce**
- **que** des opérations de travail réelles réalisées par des manipulateurs dans l'environnement de travail réel sont détectées, la position dans l'espace du manipulateur et la position dans l'espace de l'objet du travail à manipuler étant détectées,
- **que** le mouvement dans l'espace du manipulateur est comparé avec un mouvement voulu du manipulateur dans l'environnement de travail virtuel et
- **qu'**un résultat de la comparaison des opérations de travail réelles est automatiquement enregistré dans un journal.

2. Procédé selon la revendication 1, **caractérisé en ce que** l'environnement de travail réel détecté est mis en relation avec un environnement de travail virtuel et que les opérations de travail réelles réalisées par des manipulateurs sont représentées dans l'environnement de travail virtuel sous la forme d'opérations de travail virtuelles réalisées par des manipulateurs virtuels.

3. Procédé selon l'une des revendications 1 et 2, **caractérisé en ce que** le résultat de la comparaison est affiché.

4. Procédé selon l'une des revendications 1 à 3, **caractérisé en ce que** les étapes de travail soumises à une obligation de documentation sont détectées et enregistrées dans un journal.

5. Procédé selon l'une des revendications 1 à 4, **caractérisé en ce que** les étapes de travail journalisées sont enregistrées en un endroit central et qu'une progression de la production est représentée à l'aide des étapes de travail journalisées et enregistrées en un endroit central.

6. Procédé selon l'une des revendications 1 à 5, **caractérisé en ce que** la position dans l'espace de l'utilisateur et/ou la position dans l'espace de l'utilisateur par rapport au manipulateur et à l'objet de travail à manipuler est (sont) détectée(s).

7. Procédé de production d'un véhicule automobile en utilisant un procédé selon la revendication 1.
